# EUROPEAN PATENT SPECIFICATION

(11) **EP 3 145 124 B1**
(45) Date of publication and mention of the grant of the patent: **15.08.2018**
(21) Application number: 16165496.7
(22) Date of filing: 15.04.2016
(51) Int. Cl.: H04L 12/46

(54) **METHOD AND DEVICE FOR RELEASING CONNECTION**
VERFAHREN UND VORRICHTUNG ZUM LÖSEN EINER VERBINDUNG
PROCÉDÉ ET DISPOSITIF DE LIBÉRATION DE CONNEXION

(30) Priority: 17.09.2015 CN 201510595907
(43) Date of publication of application: 22.03.2017
(73) Proprietor: Xiaomi Inc., Beijing 100085 (CN)
(72) Inventor: HOU, Enxing, BEIJING 100085 (CN); REN, Qiao, BEIJING 100085 (CN); LI, Feiyun, BEIJING 100085 (CN)
(74) Representative: Delumeau, François Guy

(56) References cited:
- CN-A- 105 162 668
- US-A1- 2010 125 652
- US-A1- 2015 213 355

## Description

### TECHNICAL FIELD

The present disclosure generally relates to the field of smart home, and more particularly, to a method and a device for releasing a connection.

### BACKGROUND

In the field of smart home, an owner of a device can establish a binding relationship with the device and obtain various control permissions to the device.

The owner of the device can share part of the control permissions of the device to other family members, such that accounts of the other family members can establish permission connections with the device. For example, a user shares a permission of turning on/off a smart TV to his mother, such that his mother can have a control permission to turn on/off the smart TV. Moreover, the owner of the device can also release a permission connection between an account and the device, to withdraw a control permission of the family member to the device.

In implementation of the present disclosure, it is found at least the following defects existing in the related art.

After a control permission is shared to other accounts, to withdraw the control permission, the owner of the device has to manually release the permission connections one by one. If the owner forgets that he has shared the control permission, after the binding between the owner and the device is released, the share users might still have control permissions to the device, which poses risks to security.
Document US 2015/0213355 discloses a virtual assistant system including a mobile device, an assistant server and devices and services included within the virtual assistant system desired to be controlled. The virtual assistant system can control any such devices and services by receiving an input to perform a function at the devices and services, translate the input into a language sharable by all of the external devices and services through a respective plugin so that such inputs can be understood between the plurality of devices and services, and functions can be performed at the desired device(s) or service(s) either remotely or locally. This control is sharable with other users as instructed.

### SUMMARY

In order to solve the problem that if the owner forgets that he has once shared the control permission, after the binding between the owner and the device is released, the share user might still have the control permission to the device, the present disclosure provides a method and a device for releasing a connection. The technical solution is as follows.

According to a first aspect, the invention relates to a method for releasing a connection, including:
receiving a release request sent by a user account, the release request being for releasing a connection between the user account and a device;
if the user account is an owner account of the device, retrieving at least one share account corresponding to the device; the share account being an account having a control permission to the device shared by another user account; and
releasing a binding connection between the device and the owner account, and releasing a permission connection between the device and the at least one share account.

Optionally, the method further includes:
when the user account is a share account of the device, releasing a permission connection between the device and the user account.

Optionally, the method further includes:
receiving a first sharing request sent by the owner account to a first share account;
forwarding the first sharing request to the first share account; and
upon receipt of an accepting signal sent by the first share account for accepting the first sharing request, establishing a permission connection between the first share account and the device.

Optionally, the method further includes:
receiving a second sharing request sent by the first share account to a second share account;
forwarding the second sharing request to the second share account; and
upon receipt of an accepting signal sent by the second share account for accepting the second sharing request, establishing a permission connection between the second share account and the device.

Optionally, the method further includes:
sending a notification message to the owner account, the notification message for indicating that the second share account has established a permission connection with the device through sharing of the first share account.

According to a second aspect, the invention relates to a device for releasing a connection, including:
a request receiving module configured to receive a release request sent by a user account, the release request being for releasing a connection between the user account and a device;
a retrieving module configured to, if the user account is an owner account of the device, retrieve at least one share account corresponding to the device; the share account being an account having a control permission to the device shared by another user account; and
a first releasing module configured to release a binding connection between the device and the owner account, and release a permission connection between the device and the at least one share account.

Optionally, the device further includes:
a second releasing module configured to, when the user account is a share account of the device, release a permission connection between the device and the user account.

Optionally, the device further includes:
a first receiving module configured to receive a first sharing request sent by the owner account to a first share account;
a first forwarding module configured to forward the first sharing request to the first share account; and
a first connecting module configured to, upon receipt of an accepting signal sent by the first share account for accepting the first sharing request, establish a permission connection between the first share account and the device.

Optionally, the device further includes:
a second receiving module configured to receive a second sharing request sent by the first share account to a second share account;
a second forwarding module configured to forward the second sharing request to the second share account; and
a second connecting module configured to, upon receipt of an accepting signal sent by the second share account for accepting the second sharing request, establish a permission connection between the second share account and the device.

Optionally, the device further includes:
a notification module configured to send a notification message to the owner account, the notification message for indicating that the second share account has established a permission connection with the device through sharing of the first share account.

According to a third aspect, the invention relates to a device for releasing a connection, including:
a processor; and
a memory for storing instructions executable by the processor;
wherein the processor is configured to perform:
   receiving a release request sent by a user account, the release request being for releasing a connection between the user account and a device;
   if the user account is an owner account of the device, retrieving at least one share account corresponding to the device; the share account being an account having a control permission to the device shared by another user account; and
   releasing a binding connection between the device and the owner account, and releasing a permission connection between the device and the at least one share account.

In one particular embodiment, the steps of the method for releasing a connection are determined by computer program instructions.

Consequently, according to a fourth aspect, the invention is also directed to a computer program for executing the steps of a method for releasing a connection as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a hard disk.

Alternatively, the information medium can be an integrated circuit in which the program is incorporated, the circuit being adapted to execute the method in question or to be used in its execution.

The technical solution according to embodiments of the present disclosure may have the following beneficial effects.

A release request sent by an owner account of the device is received; at least one share account corresponding to the device is retrieved; a connection between the device and the owner account, and a connection between the device and the share account are released. Thereby, it can solve the problem that in the related art if the owner forgets that he has once shared the control permission, after the binding between the owner and the device is released, the share user might still have the control permission to the device; and it can achieve an effect that after the binding between the owner account of the device and the device is released, the permission connection between the share account of the device and the device can be simultaneously released, and the security of the device can be improved.

It is to be understood that both the foregoing general description and the following detailed description are exemplary only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram illustrating an implementation environment involved in embodiments of the present disclosure;
Fig. 2 is a flow chart illustrating a method for releasing a connection according to an exemplary embodiment;
Fig. 3A is a flow chart illustrating a method for releasing a connection according to another exemplary embodiment;
Fig. 3B is a flow chart illustrating a method for releasing a connection according to another exemplary embodiment;
Fig. 3C is a flow chart illustrating a method for releasing a connection according to another exemplary embodiment;
Fig. 4 is a block diagram of a device for releasing a connection according to an exemplary embodiment;
Fig. 5A is a block diagram of a device for releasing a connection according to another exemplary embodiment;
Fig. 5B is a block diagram of a device for releasing a connection according to another exemplary embodiment;
Fig. 5C is a block diagram of a device for releasing a connection according to another exemplary embodiment;
Fig. 6 is a block diagram of a device for releasing a connection according to an exemplary embodiment; and
Fig. 7 is a block diagram of a device for releasing a connection according to another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

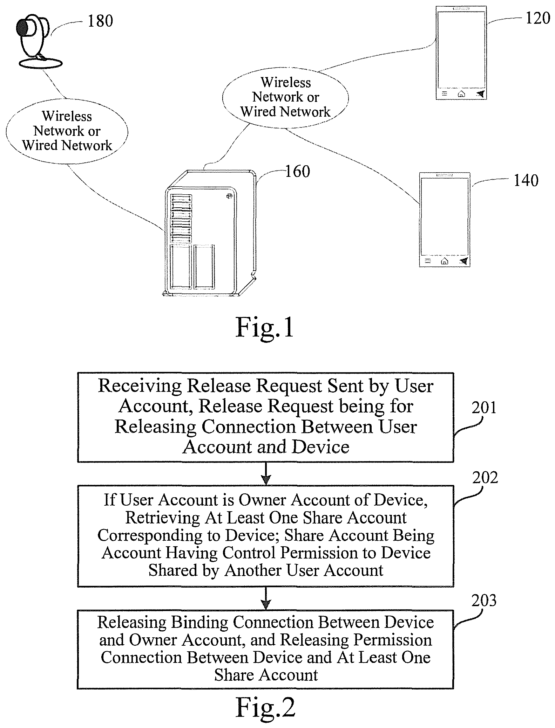

Fig. 1 is a schematic diagram illustrating an implementation environment involved in embodiments of the present disclosure. The implementation environment can include: a first terminal 120, a second terminal 140, a server 160 and a device 180.

The first terminal 120 and the second terminal 140 can be terminal devices such as a mobile phone, a tablet computer, a portable computer, a desktop computer, and the like. A user can log in a user account through a terminal. The user account is a user account of a client terminal which has manager function to a device.

It should be understood by those skilled in the art that, a user account can be logged in through various terminals, and various user accounts can be logged in through one terminal. This is not limited in the embodiments of the present disclosure. In the embodiments of the present disclosure, as an example, one user account corresponds to one terminal.

The first terminal 120 or the second terminal 140 can be connected to the server 160 through wireless network such as Wireless-Fidelity (Wi-Fi), Bluetooth or wired network.

The server 160 can be a server, or can be a server cluster composed of several servers, or a cloud calculation server center. The server 160 is configured to provide background service for the client terminal which has the manager function to a device.

The device 180 can be a device of various kinds, which is related to smart home, such as a smart camera, a smart TV, a smart air conditioner, a smart air purifier and other electrical devices.

The device 180 can establish communication connection with the server 160 through wireless or wired network.

It should be noted that, in the method for releasing a connection provided by the embodiments of the present disclosure, in addition to the first terminal 120 and the second terminal 140, other terminals can be included. This is not limited in the embodiments of the present disclosure.

Fig. 2 is a flow chart illustrating a method for releasing a connection according to an exemplary embodiment. In the present embodiment, the method for releasing a connection is applied in the server 160 as shown in Fig. 1, for example. The method can include the following steps.

In step 201, a release request sent by a user account is received, the release request being for releasing a connection with a device.

Generally, a binding connection is established between an owner account of a device and the device, and the owner account of the device has all control permissions corresponding to the device. In addition, a permission connection can be established between a share account of the device and the device, and the share account can have part of the control permissions corresponding to the device.

That is, the above term "connection" can refer to: a binding connection and/or a permission connection.

In step 202, if the user account is an owner account of the device, at least one share account corresponding to the device is retrieved; the share account being an account having a control permission to the device shared by another user account.

In step 203, a binding connection between the device and the owner account is released, and a permission connection between the device and the at least one share account is released.

Accordingly, in the method for releasing a connection provided by the embodiments of the present disclosure, a release request sent by an owner account of the device is received; at least one share account corresponding to the device is retrieved; a connection between the device and the owner account, and a connection between the device and the share account are released. Thereby, it can solve the problem that in the related art if the owner forgets that he has once shared the control permission, after the binding between the owner and the device is released, the share user might still have the control permission to the device; and it can achieve an effect that after the binding between the owner account of the device and the device is released, the permission connection between the share account of the device and the device can be simultaneously released, and the security of the device can be improved.

In the embodiment of the present disclosure, a user logs in a user account through a terminal, and a connection is established between the user account and the device. Each user account connected to the device has an identity, and the identity of the above user account can be an owner account or a share account. Generally, each device has only one owner account and can have more than one share accounts. A first user account connected to the device establishes a binding connection with the device, and the identity of the user account is determined as the owner account. Identities of other user accounts which establish permission connections with the device by accepting sharing are share accounts. The owner account has all control permissions to the device, and a share account has part of the control permissions to the device. Optionally, the above control permissions include: a permission of turning on the device, a permission of turning off the device, a permission of controlling operation parameters of the device, and other permissions. This is not limited in the embodiment of the present disclosure.

In the embodiment of the present disclosure, the method is described with reference to the implementation environment of the first terminal 120 and the second terminal 140 as shown in Fig. 1. It is assumed that the user logs in a user account through the first terminal 120, and connected to the device 180. Since the user account on the first terminal 120 is the first user account establishing a connection with the device 180, the identity of the user account on the first terminal 120 is the owner account, and a binding connection between the owner account and the device 180 is established. The second terminal 140 can be connected to the device 180 by accepting sharing and obtain part of the control permissions to the device 180. The identity of the user account on the second terminal 140 is the share account.

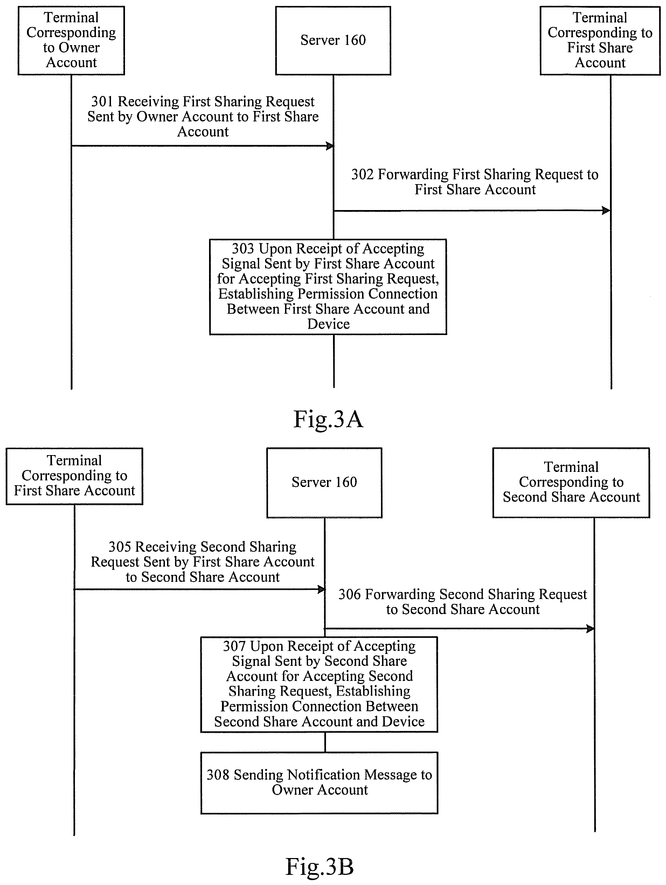

Fig. 3A is a flow chart illustrating a method for releasing a connection according to another exemplary embodiment. In the present embodiment, the method is applied in the implementation environment as shown Fig. 1, for example. The method can include the following steps.

In step 301, a first sharing request sent by the owner account to a first share account is received.

The server receives the first sharing request sent by the owner account to the first share account. The first share account refers to a user account which receives data shared by owner account as the source party.

When the user corresponding to the owner account of the device wants to share the control permission of the device to other users, the owner account can send a first sharing request to the server. The above first sharing request at least carries an identification of the device and a first share account.

The identification of the device can be an Internet Protocol (IP) address of the device, a Media Access Control (MAC) address, and the like.

Optionally, the first share account is a mobile phone number of the share user, an instant communication account of the share user, such as a QQ number, a Mi talk number, or the like. This is not limited by the present embodiment.

In step 302, the first sharing request is forwarded to the first share account.

After the server receives the first sharing request sent by the owner account, the server forwards the first sharing request to the first share account carried in the first sharing request.

In step 303, when an accepting signal sent by the first share account for accepting the first sharing request is received, a permission connection between the first share account and the device is established.

After the first share account receives the above first sharing request and selects to accept the sharing request, the first share account sends to the server an accepting signal for accepting the first sharing request.

In the present embodiment, each user account corresponds to a device list, and after a user logs in a user account through a terminal, the user can check the device list corresponding to the user account through the terminal. The above device list is configured to record information about all devices connected to the user account, the information including but not limited to names of the devices, identifications of the devices and sharing flags of the devices.

A sharing flag is displayed when the user account is a share account of the device, which is used for indicating that the identity of the user account is a share account. The specific implementation of the sharing flag can be "share account" or other flags. This is not limited by the present embodiment.

The following Table One is a form of the device list, which schematically illustrates the device list of the user account 1. It is assumed that the device 1, the device 2 and the device 3 each is connected to the user account 1. Each row of the device list records information corresponding to one device. For example, in Table One, the first row records a name 1 of the device 1, an identification 1 and a sharing flag, the second row and the third row record information corresponding to the device 2 and the device 3 respectively, and so on.

Where, the names of the devices can be a smart camera, a smart TV, a smart air conditioner and the like, as mentioned above, for the user to distinguish the different devices. The sharing flags indicate whether the user account 1 is the share accounts of the devices. For example, in Table One, the sharing flags corresponding to the device 1 and the device 3 are share accounts, the sharing flag corresponding to the device 2 is blank. It indicates that the user account 1 is the share account of the device 1 or the device 3, and is the owner account of the device 2.

It should be noted that, the format and the contents of the device list as shown in Table One are exemplary. This is not limited by the present embodiment.

**Table One**

| User Account | Name of Device | Identification of Device | Sharing Flag |
|---|---|---|---|
| User Account 1 | Name 1 | Identification 1 | Share Account |
| | Name 2 | Identification 2 | |
| | Name 3 | Identification 3 | Share Account |
| | ...... | ...... | ...... |

In the present embodiment, each device also corresponds to a device permission table, for recording relationships between each user account connected to the device and the device. The server can retrieve all user accounts connected to the device, the identity and control permission of each user account by inquiring the device permission table.

The identity of the above user account is an owner account or a share account. The following Table Two is a form of the device permission table. It is a device permission table corresponding to the device 1 with the device identification 1. It is assumed that the user account 1, the user account 2 and the user account 3 each is connected to the device 1. Each row of the device permission table records an identity and control permission of a user account. For example, in Table Two, the first row records the user account 1 and the identity of the user account 1 is the owner account, and the owner account has all control permissions; the second row records the user account 2 and the identity of the user account 2 is a share account, and this share account has permission 1 and permission 2; and the third row records the user account 3 and the identity of the user account 3 is a share account, and this share account has permission 1, and so on.

In the Table One, the user account 1 is the owner account of the device 1, the user account 2 and the user account 3 are share accounts of the device 1. Where, in the column corresponding to the identities of the user accounts, there can be only one owner account, and more than one share accounts.

It should be noted that, the format and the contents of the device permission table as shown in Table Two are exemplary. This is not limited by the present embodiment.

**Table Two**

| Identification of Device | User Account | Identity and Control Permission |
|---|---|---|
| Identification of Device 1 | User Account 1 | Owner Account (All Control Permissions) |
| | User Account 2 | Share Account (Permission1 Permission 2) |
| | User Account 3 | Share Account (Permission 1) |
| | ...... | ...... |

After the server receives the accepting signal returned by the first share account, the server adds information about the device to the device list corresponding to the first share account. In the meantime, the server adds the first share account in the device permission table of the device corresponding to the identification of the device carried in the above first sharing request, and records the identity of the user account as the share account. Thus, a permission connection between the first share account and the device is established.

Optionally, after the permission connection between the first share account and the device is established, the server can send a notification message to the owner account, to inform the owner account that the permission connection between the first share account and the device has been properly established

Optionally, when the first share account receives the above first sharing request, the first share account can return the server a first rejecting signal for rejecting the first sharing request. Then, the server returns the first rejecting signal to the owner account and does not establish the permission connection between the device and the first share account.

Optionally, the first sharing request sent by the owner account to the first share account can also include information about control permission. The information about control permission can include: a permission of turning on the device, a permission of turning off the device, a permission of controlling operation parameters of the device, and other permissions. The information about control permission is used for defining which control permission of the device the first share account can have. The owner account can send different information about control permission to different first share accounts.

It could be understood by those skilled in the art that, the method provided by the above embodiment is merely exemplary. Whenever the owner account shares a control permission of the device to any of the other user accounts, the above method of the owner account sending a request to the first share account can be applied.

In addition, the embodiment of the present disclosure also provides a re-sharing mechanism. Apart from the control permission mentioned above, the information about control permission carried in the first sharing request can also include a re-sharing permission, for sending to the first share account a re-sharing permission. The above re-sharing permission indicates that the first share account can re-share the control permission of the device to other user accounts. When the first sharing request does not contain a re-sharing permission, the first share account cannot further share the control permission to other user accounts. When the first sharing request contains a re-sharing permission, the first share account can further share part of the control permissions of the device to other user accounts. Fig. 3B is a flow chart illustrating a method for releasing a connection according to another exemplary embodiment. As shown in Fig. 3B, the method includes the following steps.

In step 305, a second sharing request sent by the first share account to a second share account is received.

The server receives the second sharing request sent by the first share account to the second share account. It should be noted that, the second share account herein refers to a user account which receives data re-shared by the first share account. Here the term "second" is merely exemplary, and merely for distinguishing from the first share account. The second share account can be any share account. This is not limited by the present embodiment.

When a user corresponding to the first share account of the device wants to share control permission of the device to other users, the first share account sends a second sharing request to the server, the above second sharing request at least carries an identification of the device and a second share account. The identification of the device can be an IP address of the device, a MAC address, and the like. The second share account can be a mobile phone number of the share user, an instant communication account of the share user, such as a QQ number, a Mi talk number, or the like. This is not limited by the present embodiment.

In step 306, the second sharing request is forwarded to the second share account.

After the server receives the second sharing request sent by the first share account, the server forwards the second sharing request to the second share account carried in the second sharing request.

In step 307, when an accepting signal sent by the second share account for accepting the second sharing request is received, a permission connection between the second share account and the device is established.

After the second share account receives the above second sharing request and selects to accept the sharing request, the second share account sends to the server an accepting signal for accepting the second sharing request.

After the server receives the accepting signal returned by the second share account, the server adds information about the device to the device list corresponding to the second share account. In the meantime, the server adds the second share account in the device permission table of the device corresponding to the identification of the device carried in the above second sharing request, and records the identity of the user account as the share account. Thus, a permission connection between the second share account and the device is established. After the second share account accepts the sharing request sent by the first share account, the second share account has the same control permission as the control permission the first share account has.

In step 308, a notification message is sent to the owner account.

After a permission connection is established between the second share account and the device, the server sends a notification message to the owner account, for informing the owner account that a permission connection is properly connected between the second share account and the device.

Optionally, the second sharing request sent by the first share account to the second share account can also include information about re-shared control permission.

Optionally, when the second share account receives the above second sharing request, the second share account can also return the server a second rejecting signal for rejecting the second sharing request. Then, the server returns the second rejecting signal to the first share account and does not establish the permission connection between the device and the second share account.

It could be understood by those skilled in the art that, the method provided by the above embodiment is merely exemplary. Whenever any share account which has re-sharing permission shares control permission of the device to other user accounts, the above method for the first share account sending a request to the second share account can be applied.

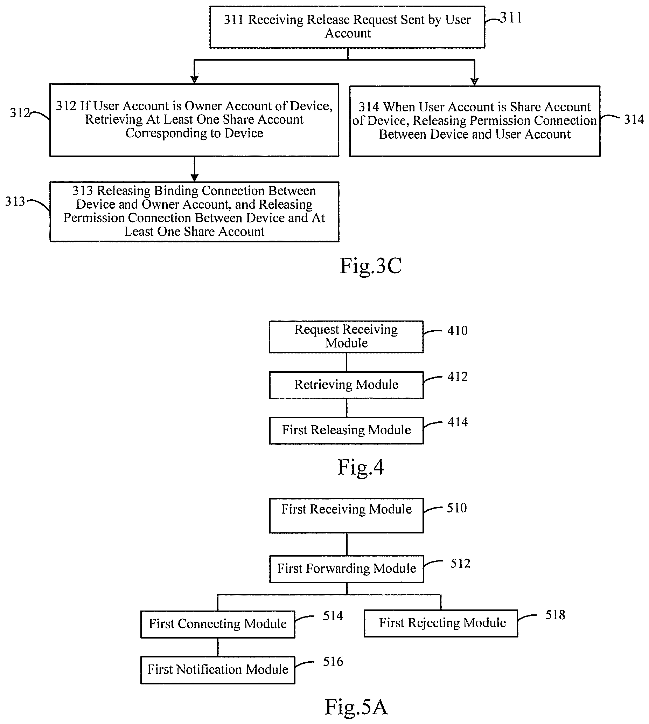

When the owner account and a share account are connected to the device, a process of releasing the connections is as shown in Fig. 3C.

In step 311, a release request sent by a user account is received.

The server receives a release request sent by a user account. The release request is for releasing a connection between the user account and the device. When a user wants to release a connection with the device, the user can log in a user account through a terminal, and send a release request for releasing connection. The release request at least contains a user account which intends to release connection, and an identification of a device to be released connection. The identification of the device can be a MAC address or an IP address of the device. This is not limited in the present embodiment.

The user account sends the release request to the server through the terminal, the release request is for instructing the server to release a connection between the user account and the device when the server determines that the user account is connected to the device as recorded.

Then, as shown in Fig. 3C, depending on the identity of the user account carried in the release request as received, the server can perform any one of the following responding manners.

### First Responding Manner

In step 312, if the above user account is an owner account of the device, at least one share account corresponding to the device is retrieved.

After the server receives the release request sent from the user account, the server inquires the device permission table of the device corresponding to the device identification carried in the release request. When the device permission table records the user account carried in the release request, it is determined that the user account has been connected to the device, and an identity of the above user account is read from the device permission table. When the identity of the above user account is the owner account of the device, the server inquires the device permission table of the device to retrieve all share accounts recorded in the device permission table that are connected to the device.

In step 313, a binding connection between the device and the owner account is released, and a permission connection between the device and the at least one share account is released.

After the server receives the release request sent by the owner account and retrieves all share accounts of the device, the server retrieves a device list for each of the owner account and the at least one share account and deletes information about the device from the device list of each of the accounts; the server retrieves the device permission table based on the identification of the device, and deletes information about the owner account and all of the share accounts from the device permission table. Thus, the binding connection between the device and the owner account is released, and the permission connection between the device and each of the share accounts is released.

### Second Responding Manner

In step 314, when the user account is a share account of the device, a permission connection between the device and the user account is released.

After the server receives the release request sent from the user account, the server inquires the device permission table of the device corresponding to the device identification carried in the release request. When the device permission table records the user account carried in the release request, it is determined that the user account has been connected to the device, and an identity of the above user account is read from the device permission table. When the identity of the above user account is a share account of the device, the server retrieves the device list of the share account based on the share account, and deletes information about the device from the device list; the server retrieves the device permission table of the device based on the identification of the device, and deletes information corresponding to the share account from the device permission table.

In one possible implementation, the release request of the share account can be sent by the share account. When the share account intends to release the permission connection with the device, the share account can initiatively send a release request, the release request carrying at least the share account and the identification of the device.

In another possible implementation, the release request of the share account can be sent by the owner account. When the owner account does not keep the control permission of the device the share account has, the owner account can send the release request to the server, the release request carrying at least the share account to be released permission connection and the identification of the device.

Accordingly, in the method provided by the present embodiment, a release request sent by the owner account is received; at least one share account corresponding to the device is retrieved; and a connection between the device and the owner account and a connection between the device and the share account are released. Thereby, it can solve the problem that in the related art if the owner forgets that he has once shared the control permission, after the binding between the owner and the device is released, the share user might still have the control permission to the device; and it can achieve an effect that after the binding between the owner account of the device and the device is released, the permission connection between the share account of the device and the device can be simultaneously released, and the security of the device can be improved.

In the method provided by the present embodiment, the owner account can send a sharing request to other user accounts, such that a connection can be established between a share account and the device and the share account can have part of the control permissions of the device. Thereby, it can allow both of the owner account and the share account to control the device remotely while ensuring that the owner account has the dominant control permission.

In the method provided by the present embodiment, a share account can re-share the permissions it has. Thereby, the share account can further send a re-sharing request to other user accounts. It can broaden the permission sharing range, and improve the utilization and operation convenience of the device.

Device embodiments of the present disclosure are described as follows, which can be configured to perform the method embodiments of the present disclosure. Details not disclosed by the device embodiments of the present disclosure can refer to the method embodiments of the present disclosure

Fig. 4 is a block diagram of a device for releasing a connection according to an exemplary embodiment. As shown in Fig. 4, the device is applied in the implementation environment as shown in Fig. 1. The device includes but not limited to: a request receiving module 410, a retrieving module 412 and a first releasing module 414.

The request receiving module 410 is configured to receive a release request sent by a user account, the release request being for releasing a connection between the user account and a device;
the retrieving module 412 is configured to, if the user account is an owner account of the device, retrieve at least one share account corresponding to the device; the share account being an account having a control permission to the device shared by another user account; and
the first releasing module 414 is configured to release a binding connection between the device and the owner account, and release a permission connection between the device and the at least one share account.

Accordingly, in the device for releasing a connection provided by the embodiment of the present disclosure, a release request sent by an owner account of the device is received; at least one share account corresponding to the device is retrieved; a connection between the device and the owner account, and a connection between the device and the share account are released. Thereby, it can solve the problem that in the related art if the owner forgets that he has once shared the control permission, after the binding between the owner and the device is released, the share user might still have the control permission to the device; and it can achieve an effect that after the binding between the owner account of the device and the device is released, the permission connection between the share account of the device and the device can be simultaneously released, and the security of the device can be improved.

Fig. 5A is a block diagram of a device for releasing a connection according to another exemplary embodiment. The device can include: a first receiving module 510, a first forwarding module 512 and a first connecting module 514.

The first receiving module 510 is configured to receive a first sharing request sent by the owner account to a first share account;
the first forwarding module 512 is configured to forward the first sharing request to the first share account. After the server receives the first sharing request sent by the owner account, the server forwards the first sharing request to the first share account carried in the first sharing request.

The first connecting module 514 is configured to, upon receipt of an accepting signal sent by the first share account for accepting the first sharing request, establish a permission connection between the first share account and the device.

Optionally, the above device further includes: a first notification module 516, configured to, after the permission connection between the first share account and the device is established, send a notification message to the owner account, the notification message for informing the owner account that the first share account has properly established a permission connection with the device.

Optionally, the above device further includes: a first rejecting module 518, configured to return a first rejecting signal to the owner account. When the first share account receives the above first sharing request, the first share account can also select to reject the first sharing request. In this case, the server returns the first rejecting signal to the owner account and will not establish a permission connection between the device and the first share account.

Optionally, the first sharing request sent by the owner account to the first share account can also include control permission data. The above control permission data can include: a permission of turning on the device, a permission of turning off the device, a permission of controlling operation parameters of the device, and other permissions. The above first control permission data is for defining which control permissions of the device the first share account can have. The owner account can send different first control permission data to different first share accounts.

It should be understood by those skilled in the art that, the device provided by the above embodiment is merely illustrative. Whenever the owner account shares a control permission of the device to any of the other user accounts, the above device of the owner account sending a request to the first share account can be applied.

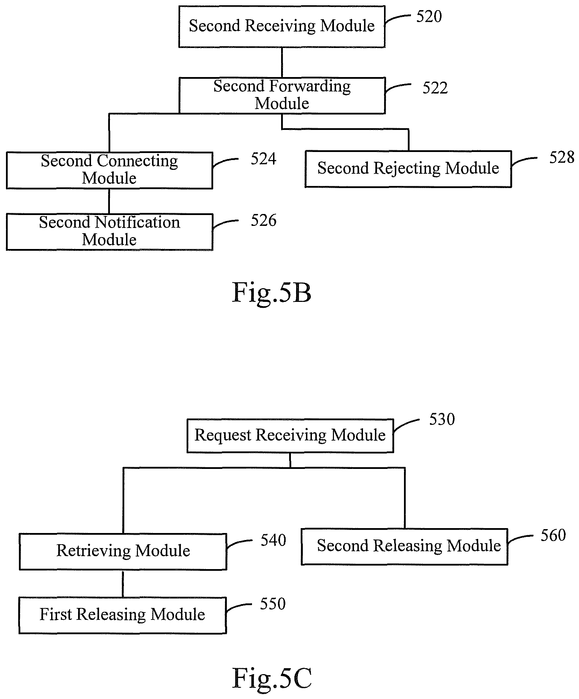

In addition, the embodiment of the present disclosure also provides a re-sharing mechanism. Apart from the control permission mentioned above, the information about control permission carried in the first sharing request can also include a re-sharing permission, for sending to the first share account a re-sharing permission. The above re-sharing permission indicates that the first share account can re-share the control permission of the device to other user accounts. When the first sharing request does not contain a re-sharing permission, the first share account cannot further share the control permission to other user accounts. When the first sharing request contains a re-sharing permission, the first share account can further share part of the control permissions of the device to other user accounts. Fig. 5B is a block diagram of a device for releasing a connection according to another exemplary embodiment. The device can include: a second receiving module 520, a second forwarding module 522, a second connecting module 524 and a second notification module 526.

The second receiving module 520 is configured to receive a second sharing request sent by the first share account to a second share account;
the second forwarding module 522 is configured to forward the second sharing request to the second share account. After the server receives the second sharing request sent by the first share account, the server forwards the second sharing request to the second share account carried in the second sharing request.

The second connecting module 524 is configured to, upon receipt of an accepting signal sent by the second share account for accepting the second sharing request, establish a permission connection between the second share account and the device; and
the second notification module 526 is configured to send a notification message to the owner account. After a permission connection between the second share account and the device is established, the server sends a notification message to the owner account, informing the owner account that the second share account has properly established a permission connection with the device.

Optionally, the second sharing request sent by the first share account to the second share account can also include information about a re-sharing permission.

Optionally, the above device further includes: a second rejecting module 528, configured to return a second rejecting signal to the first share account. When the second share account receives the above second sharing request, the second share account can also select to reject the second sharing account. In this case, the server returns the second rejecting signal to the first share account and will not establish a permission connection between the device and the second share account.

It should be understood by those skilled in the art that, the device provided by the above embodiment is merely illustrative. Whenever any share account which has re-sharing permission shares control permission of the device to other user accounts, the above device for the first share account sending a request to the second share account can be applied.

Fig. 5C is a block diagram of a device for releasing a connection according to another exemplary embodiment. When both of an owner account and a share account are connected to the device, the connection is released as shown in the block diagram of Fig. 5C. The device can include: a request receiving module 530, a retrieving module 540, a first releasing module 550 and a second releasing module 560.

The request receiving module 530 is configured to receive a release request sent by a user account, the release request being for instructing the server to release a connection between the user account and a device when the server determines that the user account is connected to the device as recorded.

At this time, as can be seen from Fig. 5C, the process branches. Depending on different identities of the user accounts carried in the received release request, the server can respond in any of the following manners.

First responding manner:
the retrieving module 540 is configured to, if the user account is an owner account of the device, retrieve at least one share account corresponding to the device.
the first releasing module 550 is configured to release a binding connection between the device and the owner account, and release a permission connection between the device and the at least one share account.

Second responding manner:
the second releasing module 560 is configured to, when the user account is a share account of the device, release a permission connection between the device and the user account.

In one possible implementation, the release request of the share account can be sent by the share account. When the share account intends to release the permission connection with the device, the share account can initiatively send a release request, the release request carrying at least the share account and the identification of the device.

In another possible implementation, the release request of the share account can be sent by the owner account. When the owner account does not keep the control permission of the device the share account has, the owner account can send the release request to the server, the release request carrying at least the share account to be released permission connection and the identification of the device.

Accordingly, in the device provided by the present embodiment, a release request sent by the owner account is received; at least one share account corresponding to the device is retrieved; and a connection between the device and the owner account and a connection between the device and the share account are released. Thereby, it can solve the problem that in the related art if the owner forgets that he has once shared the control permission, after the binding between the owner and the device is released, the share user might still have the control permission to the device; and it can achieve an effect that after the binding between the owner account of the device and the device is released, the permission connection between the share account of the device and the device can be simultaneously released, and the security of the device can be improved.

In the device provided by the present embodiment, the owner account can send a sharing request to other user accounts, such that a connection can be established between a share account and the device and the share account can have part of the control permissions of the device. Thereby, it can allow both of the owner account and the share account to control the device remotely while ensuring that the owner account has the dominant control permission.

In the device provided by the present embodiment, a share account can re-share the permissions it has. Thereby, the share account can further send a re-sharing request to other user accounts. It can broaden the permission sharing range, and improve the utilization and operation convenience of the device.

With respect to the devices in the above embodiments, the specific manners for performing operations for individual modules therein have been described in detail in the embodiments regarding the relevant methods, which will not be elaborated herein.

An exemplary embodiment of the present disclosure provides a device for releasing a connection, which can implement the method for releasing a connection. The device includes: a processor; and a memory for storing instructions executable by the processor;
wherein the processor is configured to perform:
receiving a release request sent by a user account, the release request being for releasing a connection between the user account and a device;
if the user account is an owner account of the device, retrieving at least one share account corresponding to the device; the share account being an account having a control permission to the device shared by another user account; and
releasing a binding connection between the device and the owner account, and releasing a permission connection between the device and the at least one share account.

Optionally, the processor is configured to perform:
when the user account is a share account of the device, releasing a permission connection between the device and the user account.

Optionally, the processor is configured to perform:
receiving a first sharing request sent by the owner account to a first share account;
forwarding the first sharing request to the first share account; and
upon receipt of an accepting signal sent by the first share account for accepting the first sharing request, establishing a permission connection between the first share account and the device.

Optionally, the processor is configured to perform:
receiving a second sharing request sent by the first share account to a second share account;
forwarding the second sharing request to the second share account; and
upon receipt of an accepting signal sent by the second share account for accepting the second sharing request, establishing a permission connection between the second share account and the device.

Optionally, the processor is configured to perform:
sending a notification message to the owner account, the notification message for indicating that the second share account has established a permission connection with the device through sharing of the first share account.

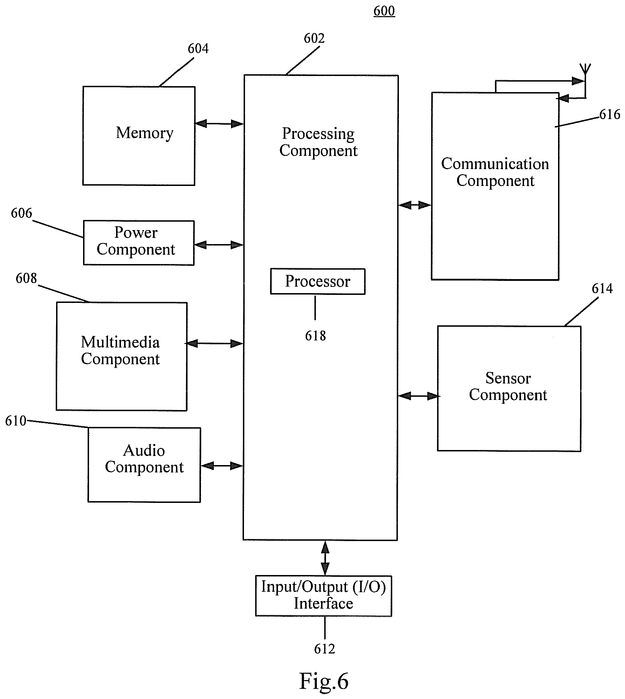

Fig. 6 is a block diagram of a device 600 according to an exemplary embodiment. For example, the device 600 can be a mobile phone, a computer, a digital broadcast terminal, a messaging device, a gaming console, a tablet, a medical device, exercise equipment, a personal digital assistant, and the like.

Referring to Fig. 6, the device 600 can include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 can include one or more processors 618 to execute instructions to perform all or part of the steps in the above described methods. Moreover, the processing component 602 can include one or more modules which facilitate the interaction between the processing component 602 and other components. For instance, the processing component 602 can include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 can include a power management system, one or more power sources, and any other components associated with the generation, management, and distribution of power in the device 600.

The multimedia component 608 includes a screen providing an output interface between the device 600 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 608 includes a front camera and/or a rear camera. The front camera and the rear camera can receive an external multimedia datum while the device 600 is in an operation mode, such as a photographing mode or a video mode. Each of the front camera and the rear camera can be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal can be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons can include, but are not limited to, a home button, a volume button, a starting button, and a locking button.

The sensor component 614 includes one or more sensors to provide status assessments of various aspects of the device 600. For instance, the sensor component 614 can detect an open/closed status of the device 600, relative positioning of components, e.g., the display and the keypad, of the device 600, a change in position of the device 600 or a component of the device 600, a presence or absence of user contact with the device 600, an orientation or an acceleration/deceleration of the device 600, and a change in temperature of the device 600. The sensor component 614 can include a proximity sensor configured to detect the presence of nearby objects without any physical contact. The sensor component 614 can also include a light sensor, such as a CMOS or CCD image sensor, for use in imaging applications. In some embodiments, the sensor component 614 can also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 600 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods for releasing a connection at the first device side or at the second device side.

In exemplary embodiments, there is also provided a non-transitory computer-readable storage medium including instructions, such as included in the memory 604, executable by the processor 618 in the device 600, for performing the above-described methods. For example, the non-transitory computer-readable storage medium can be a ROM, a RAM, a CD-ROM, a magnetic tape, a floppy disc, an optical data storage device, and the like.

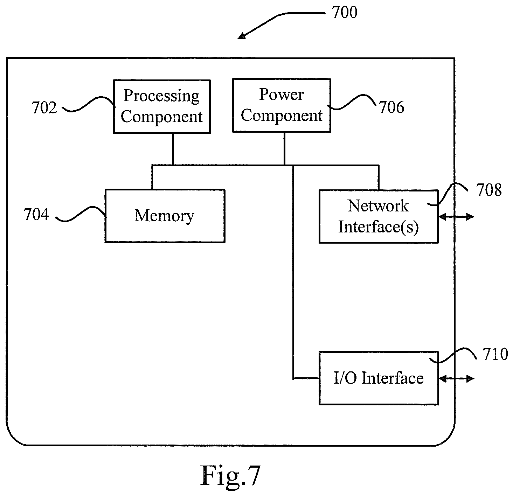

Fig. 7 is a block diagram of a device for releasing a connection according to another exemplary embodiment. For example, the device 700 may be provided as a device at a network side. Referring to Fig. 7, the device 700 includes a processing component 702 that further includes one or more processors, and memory resources represented by a memory 704 for storing instructions executable by the processing component 702, such as application programs. The application programs stored in the memory 704 may include one or more modules each corresponding to a set of instructions. Further, the processing component 702 is configured to execute the instructions to perform the above described method for releasing a connection at the server side.

The device 700 may also include a power component 706 configured to perform power management of the device 700, wired or wireless network interface(s) 708 configured to connect the device 700 to a network, and an input/output (I/O) interface 710. The device 700 may operate based on an operating system stored in the memory 704, such as Windows Server™, Mac OS X™, Unix™, Linux™, FreeBSD™, or the like.

## Claims

1. A method for releasing a connection, which is applied in a server, **characterized in that**, the method comprises:
receiving (201, 311) a release request sent by a user account, the release request being for releasing a connection between the user account and a device;
if the user account is an owner account of the device, retrieving (202, 312) at least one share account corresponding to the device; the share account being an account having a control permission to the device shared by another user account; and
releasing (203, 313) a binding connection between the device and the owner account, and releasing a permission connection between the device and the at least one share account.

2. The method of claim 1, wherein the method further comprises:
when the user account is a share account of the device, releasing (314) a permission connection between the device and the user account.

3. The method of claim 1 or 2, wherein the method further comprises:
receiving (301) a first sharing request sent by the owner account to a first share account;
forwarding (302) the first sharing request to the first share account; and
upon receipt of an accepting signal sent by the first share account for accepting the first sharing request, establishing (303) a permission connection between the first share account and the device.

4. The method of claim 3, wherein the method further comprises:
receiving (305) a second sharing request sent by the first share account to a second share account;
forwarding (306) the second sharing request to the second share account; and
upon receipt of an accepting signal sent by the second share account for accepting the second sharing request, establishing (307) a permission connection between the second share account and the device.

5. The method of claim 4, wherein the method further comprises:
sending (308) a notification message to the owner account, the notification message for indicating that the second share account has established a permission connection with the device through sharing of the first share account.

6. An apparatus for releasing a connection, **characterized in that** the apparatus comprises:
a request receiving module (410, 530) configured to receive a release request sent by a user account, the release request being for releasing a connection between the user account and a device;
a retrieving module (412, 540) configured to, if the user account is an owner account of the device, retrieve at least one share account corresponding to the device; the share account being an account having a control permission to the device shared by another user account; and
a first releasing module (414, 550) configured to release a binding connection between the device and the owner account, and release a permission connection between the device and the at least one share account.

7. The apparatus of claim 6, wherein the apparatus further comprises:
a second releasing module (560) configured to, when the user account is a share account of the device, release a permission connection between the device and the user account.

8. The apparatus of claim 6 or 7, wherein the apparatus further comprises:
a first receiving module (510) configured to receive a first sharing request sent by the owner account to a first share account;
a first forwarding module (512) configured to forward the first sharing request to the first share account; and
a first connecting module (514) configured to, upon receipt of an accepting signal sent by the first share account for accepting the first sharing request, establish a permission connection between the first share account and the device.

9. The apparatus of claim 8, wherein the apparatus further comprises:
a second receiving module (520) configured to receive a second sharing request sent by the first share account to a second share account;
a second forwarding module (522) configured to forward the second sharing request to the second share account; and
a second connecting module (524) configured to, upon receipt of an accepting signal sent by the second share account for accepting the second sharing request, establish a permission connection between the second share account and the device.

10. The apparatus of claim 9, wherein the apparatus further comprises:
a notification module (528) configured to send a notification message to the owner account, the notification message for indicating that the second share account has established a permission connection with the device through sharing of the first share account.

11. An apparatus for releasing a connection, comprising:
a processor (618); and
a memory (604) for storing instructions executable by the processor; **characterized by** the processor (618) being configured to perform:
receiving a release request sent by a user account, the release request being for releasing a connection between the user account and a device;
if the user account is an owner account of the device, retrieving at least one share account corresponding to the device; the share account being an account having a control permission to the device shared by another user account; and
releasing a binding connection between the device and the owner account, and releasing a permission connection between the device and the at least one share account.

12. A computer program including instructions for executing the steps of a method for releasing a connection according to any one of claims 1 to 5 when said program is executed by a computer.

13. A recording medium readable by a computer and having recorded thereon a computer program including instructions for executing the steps of a method for releasing a connection according to any one of claims 1 to 5.

## Patentansprüche

1. Verfahren zum Freigeben einer Verbindung, das in einem Server angewendet wird, **dadurch gekennzeichnet, dass** das Verfahren umfasst:
Empfangen (201, 311) einer durch ein Benutzerkonto gesendeten Freigabeanforderung, wobei die Freigabeanforderung zum Freigeben einer Verbindung zwischen dem Benutzerkonto und einem Gerät dient,
wenn das Benutzerkonto ein Eigentümerkonto des Geräts ist, Abfragen (202, 312) mindestens eines gemeinsam genutztes Kontos, das dem Gerät entspricht, wobei das gemeinsam genutztes Konto ein Konto ist, das eine Steuerungsberechtigung am Gerät hat, das durch ein anderes Benutzerkonto gemeinsam genutzt wird, und
Freigeben (203, 313) einer Bindungsverbindung zwischen dem Gerät und dem Eigentümerkonto, und Freigeben einer Berechtigungsverbindung zwischen dem Gerät und dem mindestens einen gemeinsam genutzten Konto.

2. Verfahren nach Anspruch 1, wobei das Verfahren ferner umfasst:
wenn das Benutzerkonto ein gemeinsam genutztes Konto des Geräts ist, Freigeben (314) einer Berechtigungsverbindung zwischen dem Gerät und dem Benutzerkonto.

3. Verfahren nach Anspruch 1 oder 2, wobei das Verfahren ferner umfasst:
Empfangen (301) einer ersten Anfrage nach einer gemeinsamen Nutzung, die die durch das Eigentümerkonto an ein erstes gemeinsam genutztes Konto gesendet wird,
Weiterleiten (302) der ersten Anfrage nach einer gemeinsamen Nutzung an das erste gemeinsam genutzte Konto, und
beim Empfang eines Annahmesignals, das durch das erste gemeinsam genutztes Konto zum Annehmen der ersten Anfrage nach einer gemeinsamen Nutzung gesendet wird, Herstellen (303) einer Berechtigungsverbindung zwischen dem ersten gemeinsam genutztes Konto und dem Gerät.

4. Verfahren nach Anspruch 3, wobei das Verfahren ferner umfasst:
Empfangen (305) einer zweiten Anfrage nach einer gemeinsamen Nutzung, die durch das erste gemeinsam genutzte Konto an ein zweites gemeinsam genutztes Konto gesendet wird,
Weiterleiten (306) der zweiten Anfrage nach einer gemeinsamen Nutzung an das zweite gemeinsam genutzte Konto, und
beim Empfang eines Annahmesignals, das durch das zweite gemeinsam genutzte Konto zum Annehmen der zweiten Anfrage nach einer gemeinsamen Nutzung gesendet wird, Herstellen (307) einer Berechtigungsverbindung zwischen dem zweiten gemeinsam genutztes Konto und dem Gerät.

5. Verfahren nach Anspruch 4, wobei das Verfahren ferner umfasst:
Senden (308) einer Bestätigungsnachricht an das Eigentümerkonto, wobei die Bestätigungsnachricht zum Anzeigen dient, dass das zweite gemeinsam genutzte Konto eine Berechtigungsverbindung mit dem Gerät durch gemeinsame Nutzung des ersten gemeinsam genutzten Kontos hergestellt hat.

6. Vorrichtung zum Freigeben einer Verbindung, **dadurch gekennzeichnet, dass** die Vorrichtung umfasst:
ein Anfrageempfangsmodul (410, 530), das konfiguriert ist, eine durch ein Benutzerkonto gesendete Freigabeanforderung zu empfangen, wobei die Freigabeanforderung zum Freigeben einer Verbindung zwischen dem Benutzerkonto und einem Gerät dient,
ein Abfragemodul (412, 540), das konfiguriert ist, wenn das Benutzerkonto ein Eigentümerkonto des Geräts ist, mindestens ein gemeinsam genutztes Konto abzufragen, das dem Gerät entspricht, wobei das gemeinsam genutztes Konto ein Konto ist, das eine Steuerungsberechtigung am Gerät hat, das durch ein anderes Benutzerkonto gemeinsam genutzt wird, und
ein erstes Freigabemodul (414, 550), das konfiguriert ist, eine Bindungsverbindung zwischen dem Gerät und dem Eigentümerkonto freizugeben, und eine Berechtigungsverbindung zwischen dem Gerät und dem mindestens einen gemeinsam genutzten Konto freizugeben.

7. Vorrichtung nach Anspruch 6, wobei die Vorrichtung ferner umfasst:
ein zweites Freigabemodul (560), das konfiguriert ist, wenn das Benutzerkonto ein gemeinsam genutztes Konto des Geräts ist, eine Berechtigungsverbindung zwischen dem Gerät und dem Benutzerkonto freizugeben.

8. Vorrichtung nach Anspruch 6 oder 7, wobei die Vorrichtung ferner umfasst:
ein erstes Empfangsmodul (510), das konfiguriert ist, eine erste Anfrage nach einer gemeinsamen Nutzung zu empfangen, die durch das Eigentümerkonto an ein erstes gemeinsam genutztes Konto gesendet wird,
ein erstes Weiterleitungsmodul (512), das konfiguriert ist, die erste Anfrage nach einer gemeinsamen Nutzung an das erste gemeinsam genutzte Konto weiterzuleiten, und
ein erstes Verbindungsmodul (514), das konfiguriert ist, beim Empfang eines Annahmesignals, das durch das erste gemeinsam genutztes Konto zum Annehmen der ersten Anfrage nach einer gemeinsamen Nutzung gesendet wird, eine Berechtigungsverbindung zwischen dem ersten gemeinsam genutztes Konto und dem Gerät herzustellen.

9. Vorrichtung nach Anspruch 8, wobei die Vorrichtung ferner umfasst:
ein zweites Empfangsmodul (520), das konfiguriert ist, eine zweite Anfrage nach einer gemeinsamen Nutzung zu empfangen, die durch das erste gemeinsam genutzte Konto an ein zweites gemeinsam genutztes Konto gesendet wird,
ein zweites Weiterleitungsmodul (522), das konfiguriert ist, die zweite Anfrage nach einer gemeinsamen Nutzung an das zweite gemeinsam genutzte Konto weiterzuleiten, und
ein zweites Verbindungsmodul (524), das konfiguriert ist, beim Empfang eines Annahmesignals, das durch das zweite gemeinsam genutzte Konto zum Annehmen der zweiten Anfrage nach einer gemeinsamen Nutzung gesendet wird, eine Berechtigungsverbindung zwischen dem zweiten gemeinsam genutztes Konto und dem Gerät herzustellen.

10. Vorrichtung nach Anspruch 9, wobei die Vorrichtung ferner umfasst:
ein Bestätigungsmodul (528), das konfiguriert ist, eine Bestätigungsnachricht an das Eigentümerkonto zu senden, wobei die Bestätigungsnachricht zum Anzeigen dient, dass das zweite gemeinsam genutzte Konto eine Berechtigungsverbindung mit dem Gerät durch gemeinsame Nutzung des ersten gemeinsam genutzten Kontos hergestellt hat.

11. Vorrichtung zum Freigeben einer Verbindung, umfassend:
einen Prozessor (618), und
einen Speicher (604) zum Speichern von Befehlen, die durch den Prozessor ausführbar sind,
**dadurch gekennzeichnet, dass** der Prozessor (618) konfiguriert ist, auszuführen:
Empfangen einer durch ein Benutzerkonto gesendeten Freigabeanforderung, wobei die Freigabeanforderung zum Freigeben einer Verbindung zwischen dem Benutzerkonto und einem Gerät dient,
wenn das Benutzerkonto ein Eigentümerkonto des Geräts ist, Abfragen mindestens eines gemeinsam genutzten Kontos, das dem Gerät entspricht, wobei das gemeinsam genutztes Konto ein Konto ist, das eine Steuerungsberechtigung am Gerät hat, das durch ein anderes Benutzerkonto gemeinsam genutzt wird, und
Freigeben einer Bindungsverbindung zwischen dem Gerät und dem Eigentümerkonto, und Freigeben einer Berechtigungsverbindung zwischen dem Gerät und dem mindestens einen gemeinsam genutzten Konto.

12. Computerprogramm, das Befehle zum Ausführen der Schritte eines Verfahrens zum Freigeben einer Verbindung nach einem der Ansprüche 1 bis 5 umfasst, wenn das Programm durch einen Computer ausgeführt wird.

13. Aufzeichnungsmedium, das durch einen Computer lesbar ist und das ein darauf aufgezeichnetes Computerprogramm aufweist, das Befehle zum Ausführen der Schritte eines Verfahrens zum Freigeben einer Verbindung nach einem der Ansprüche 1 bis 5 umfasst.

## Revendications

1. Procédé pour libérer une connexion, qui est appliqué dans un serveur, **caractérisé en ce que**, le procédé comprend :
la réception (201, 311) d'une demande de libération envoyée par un compte d'utilisateur, la demande de libération étant destinée à libérer une connexion entre le compte d'utilisateur et un dispositif ;
si le compte d'utilisateur est un compte de propriétaire du dispositif, la récupération (202, 312) d'au moins un compte de partage correspondant au dispositif ; le compte de partage étant un compte ayant une autorisation de contrôle sur le dispositif partagé par un autre compte d'utilisateur ; et
la libération (203, 313) d'une connexion de liaison entre le dispositif et le compte de propriétaire, et la libération d'une connexion d'autorisation entre le dispositif et le au moins un compte de partage.

2. Procédé selon la revendication 1, dans lequel le procédé comprend en outre :
lorsque le compte d'utilisateur est un compte de partage du dispositif, la libération (314) d'une connexion d'autorisation entre le dispositif et le compte d'utilisateur.

3. Procédé selon la revendication 1 ou 2, dans lequel le procédé comprend en outre :
la réception (301) d'une première demande de partage envoyée par le compte de propriétaire à un premier compte de partage ;
le transfert (302) de la première demande de partage au premier compte de partage ; et
à la réception d'un signal d'acceptation envoyé par le premier compte de partage pour accepter la première demande de partage, l'établissement (303) d'une connexion d'autorisation entre le premier compte de partage et le dispositif.

4. Procédé selon la revendication 3, dans lequel le procédé comprend en outre :
la réception (305) d'une seconde demande de partage envoyée par le premier compte de partage à un second compte de partage ;
le transfert (306) de la seconde demande de partage au second compte de partage ; et
à la réception d'un signal d'acceptation envoyé par le second compte de partage pour accepter la seconde demande de partage, l'établissement (307) d'une connexion d'autorisation entre le second compte de partage et le dispositif.

5. Procédé selon la revendication 4, dans lequel le procédé comprend en outre :
l'envoi (308) d'un message de notification au compte de propriétaire, le message de notification destiné à indiquer que le second compte de partage a établi une connexion d'autorisation avec le dispositif par l'intermédiaire du partage du premier compte de partage.

6. Appareil pour libérer une connexion, **caractérisé en ce que** l'appareil comprend :
un module de réception de demande (410, 530) configuré pour recevoir une demande de libération envoyée par un compte d'utilisateur, la demande de libération étant destinée à libérer une connexion entre le compte d'utilisateur et un dispositif ;
un module de récupération (412, 540) configuré pour, si le compte d'utilisateur est un compte de propriétaire du dispositif, récupérer au moins un compte de partage correspondant au dispositif ; le compte de partage étant un compte ayant une autorisation de contrôle sur le dispositif partagé par un autre compte d'utilisateur ; et
un premier module de libération (414, 550) configuré pour libérer une connexion de liaison entre le dispositif et le compte de propriétaire, et libérer une connexion d'autorisation entre le dispositif et le au moins un compte de partage.

7. Appareil selon la revendication 6, dans lequel l'appareil comprend en outre :
un second module de libération (560) configuré pour, lorsque le compte d'utilisateur est un compte de partage du dispositif, libérer une connexion d'autorisation entre le dispositif et le compte d'utilisateur.

8. Appareil selon la revendication 6 ou 7, dans lequel l'appareil comprend en outre :
un premier module de réception (510) configuré pour recevoir une première demande de partage envoyée par le compte de propriétaire à un premier compte de partage ;
un premier module de transfert (512) configuré pour transférer la première demande de partage au premier compte de partage ; et
un premier module de connexion (514) configuré pour, à la réception d'un signal d'acceptation envoyé par le premier compte de partage pour accepter la première demande de partage, établir une connexion d'autorisation entre le premier compte de partage et le dispositif.

9. Appareil selon la revendication 8, dans lequel l'appareil comprend en outre :
un second module de réception (520) configuré pour recevoir une seconde demande de partage envoyée par le premier compte de partage à un second compte de partage ;
un second module de transfert (522) configuré pour transférer la seconde demande de partage au second compte de partage ; et
un second module de connexion (524) configuré pour, à la réception d'un signal d'acceptation envoyé par le second compte de partage pour accepter la seconde demande de partage, établir une connexion d'autorisation entre le second compte de partage et le dispositif.

10. Appareil selon la revendication 9, dans lequel l'appareil comprend en outre :
un module de notification (528) configuré pour envoyer un message de notification au compte de propriétaire, le message de notification destiné à indiquer que le second compte de partage a établi une connexion d'autorisation avec le dispositif par l'intermédiaire du partage du premier compte de partage.

11. Appareil pour libérer une connexion, comprenant :
un processeur (618) ; et
une mémoire (604) pour stocker des instructions exécutables par le processeur ;
**caractérisé par** le processeur (618) étant configuré pour effectuer :
la réception d'une demande de libération envoyée par un compte d'utilisateur, la demande de libération étant destinée à libérer une connexion entre le compte d'utilisateur et un dispositif ;
si le compte d'utilisateur est un compte de propriétaire du dispositif, la récupération d'au moins un compte de partage correspondant au dispositif ; le compte de partage étant un compte ayant une autorisation de contrôle sur le dispositif partagé par un autre compte d'utilisateur ; et
la libération d'une connexion de liaison entre le dispositif et le compte de propriétaire, et la libération d'une connexion d'autorisation entre le dispositif et le au moins un compte de partage.

12. Programme d'ordinateur incluant des instructions pour exécuter les étapes d'un procédé pour libérer une connexion selon l'une quelconque des revendications 1 à 5 lorsque ledit programme est exécuté par un ordinateur.

13. Support d'enregistrement lisible par un ordinateur et sur lequel est enregistré un programme d'ordinateur incluant des instructions pour exécuter les étapes d'un procédé pour libérer une connexion selon l'une quelconque des revendications 1 à 5.
